# EUROPEAN PATENT APPLICATION

(11) **EP 4 506 570 A1**
(43) Date of publication of application: **12.02.2025**
(21) Application number: 24193366.2
(22) Date of filing: 07.08.2024
(51) Int. Cl.: F04D 19/02, F04D 27/02, F04D 29/52

(54) **COMPRESSOR BLEED OFFTAKE**

(30) Priority: 07.08.2023 US 202318231067
(71) Applicant: PRATT & WHITNEY CANADA CORP., Longueuil, Québec J4G 1A1 (CA)
(72) Inventor: DUONG, Hien, (01BE5) Longueuil, J4G 1A1 (CA)
(74) Representative: Dehns

(57) **Abstract**

An annular compressor shroud (42) for a turbine engine that extends along an engine axial centerline (30) is provided. The compressor shroud (42) includes inner and outer radial panels (46, 48), forward and aft panels (52), an airflow exit opening (76), and an offtake. The panels collectively define an annular interior region (54). The airflow exit opening (76) is disposed within the outer radial panel (48). The offtake (72) is disposed in the inner radial panel (46) and includes an offtake passage (74). The inner radial panel segment (46A) has an interior surface (56) contiguous with the interior region (54) and an exterior surface (58) that is opposite the interior surface. The exterior surface (58) is contiguous with the offtake passage (74). A plurality of apertures (64) are disposed in the inner radial panel segment. Each aperture (64) is configured to permit airflow between the interior region (54) and the offtake passage (74).

## Description

### BACKGROUND OF THE INVENTION

### 1. Technical Field

This disclosure relates to gas turbine engines in general and to gas turbine engine compressor shrouds in particular.

### 2. Background Information

Compressor shroud bleed systems typically produce a performance loss even when bleed is fully closed. The performance loss is a result of momentum exchange between flow inside bleed cavity and main gas path flow. The momentum exchange is driven mainly by pressure difference which can be a result of rotating airfoil or local flow conditions in the case of stator. When the bleed system is controlled to bleed air (i.e., "offtake"), local flow separation can increase the pressure difference between flow inside bleed cavity and main gas path flow resulting not only in a main flow performance loss and can also reduce pressure recovery inside the bleed cavity.

### SUMMARY

According to an aspect of the present disclosure, an annular compressor shroud for a turbine engine that extends along an engine axial centerline is provided. The compressor shroud includes an inner radial panel, an outer radial panel, a forward panel, an aft panel, an airflow exit opening, and an offtake. The inner and outer radial panels and the forward and aft panels collectively define an annular interior region. The inner radial panel is disposed radially inside of the outer radial panel. The forward panel extends between the inner radial panel and the outer radial panel and is disposed at a forward end of the compressor shroud. The aft panel extends between the inner radial panel and the outer radial panel and is disposed at an aft end of the compressor shroud. The airflow exit opening is disposed within the outer radial panel. The offtake is disposed in the inner radial panel. The offtake is defined in part by a segment of the inner radial panel. The inner radial panel segment extends a distance into the interior region. The offtake includes an offtake passage that is in part defined by the inner radial panel segment. The inner radial panel segment has an interior surface contiguous with the interior region and an exterior surface that is opposite the interior surface. The exterior surface is contiguous with the offtake passage. A plurality of apertures are disposed in the inner radial panel segment. Each aperture is configured to permit airflow between the interior region and the offtake passage.

In an embodiment of the above, the offtake may be defined by the inner radial panel segment and a portion of the aft panel. The inner radial panel segment and the aft panel portion are spaced apart from one another and the offtake passage is disposed between the inner radial panel segment and the aft panel portion.

In a further embodiment of any of the above, the inner radial panel segment (IRPS) may extend lengthwise at an IRPS angle that is acute relative to the axial centerline.

In a further embodiment of any of the above, the apertures may be circumferentially spaced apart from one another.

In a further embodiment of any of the above, each aperture may have a first opening at the interior surface of the inner radial panel segment and a second opening at the exterior surface of the inner radial panel segment, and the first opening may have a first geometric shape and the second opening may have a second geometric shape, and the first geometric shape and the second geometric shape may be the same, or they may be different from one another.

In a further embodiment of any of the above, the first opening may have a first cross-sectional area and the second opening may have a second cross-sectional area, and the first cross-sectional area may be different in magnitude than the second cross-sectional area.

In a further embodiment of any of the above, the first cross-sectional area may be greater in magnitude than the second cross-sectional area.

In a further embodiment of any of the above, the first cross-sectional area may be about one and one-half times greater in magnitude than the second cross-sectional area.

In a further embodiment of any of the above, each aperture may have a first opening at the interior surface of the inner radial panel segment and a second opening at the exterior surface of the inner radial panel segment, and the first opening may have a first geometric shape and the second opening may have a second geometric shape, and the first geometric shape is different than the second geometric shape.

In a further embodiment of any of the above, each aperture may have a first opening with a first center point at the interior surface of the inner radial panel segment and a second opening with a second center point at the exterior surface of the inner radial panel segment, and each aperture has an aperture axis that extends between the first center point and the second center point, and the aperture axis may extend in a direction parallel to the engine axial centerline, or skewed relative to the engine axial centerline.

In a further embodiment of any of the above, the aperture axis may extend in a direction that is radially skewed relative to the engine axial centerline or axially skewed relative to the engine axial centerline, or the aperture axis may extend in a direction that is both radially skewed relative to the engine axial centerline and axially skewed relative to the engine axial centerline.

In a further embodiment of any of the above, each aperture may have a first opening with a first center point at the interior surface of the inner radial panel segment and a second opening with a second center point at the exterior surface of the inner radial panel segment, and the first center point may be axially misaligned with the second center point, or radially misaligned with the second center point, or both axially and radially misaligned with the second center point.

According to an aspect of the present disclosure, a gas turbine engine having an engine axial centerline is provided that includes a compressor section, a combustor section, and a turbine section. The compressor section has a plurality of rotor stages and stator vane stages, each rotor stage having a plurality of rotor blades, and each rotor blade having a blade tip. Each stator vane stage has a plurality of stator vanes. The compressor includes an annular compressor shroud that includes an inner radial panel, an outer radial panel, a forward panel, an aft panel, an airflow exit opening, and an offtake. The inner and outer radial panels and the forward and aft panels collectively define an annular interior region. The inner radial panel is disposed radially inside of the outer radial panel. The forward panel extends between the inner radial panel and the outer radial panel and is disposed at a forward end of the compressor shroud. The aft panel extends between the inner radial panel and the outer radial panel and is disposed at an aft end of the compressor shroud. The airflow exit opening is disposed within the outer radial panel. The offtake is disposed in the inner radial panel. The offtake is defined in part by a segment of the inner radial panel. The inner radial panel segment extends a distance into the interior region. The offtake includes an offtake passage that is in part defined by the inner radial panel segment. The inner radial panel segment has an interior surface contiguous with the interior region and an exterior surface that is opposite the interior surface. The exterior surface is contiguous with the offtake passage. A plurality of apertures are disposed in the inner radial panel segment. Each aperture is configured to permit airflow between the interior region and the offtake passage.

In an embodiment of the above, the offtake is defined by the inner radial panel segment and a portion of the aft panel, wherein the inner radial panel segment is spaced apart from the aft panel portion and the offtake passage is disposed between the inner radial panel segment and the aft panel portion, and the inner radial panel segment (IRPS) extends lengthwise at an IRPS angle that is acute relative to the axial centerline.

In a further embodiment of any of the above, each aperture has a first opening at the interior surface of the inner radial panel segment and a second opening at the exterior surface of the inner radial panel segment, and the first opening has a first cross-sectional area and the second opening has a second cross-sectional area, and the first cross-sectional area is greater in magnitude than the second cross-sectional area.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic representation view of a turbine engine embodiment.
FIG. 2 is a diagrammatic planar view of a sectioned compressor shroud embodiment engaged with a rotor blade.
FIG. 3 is a diagrammatic planar view of a sectioned compressor shroud embodiment engaged with a stator vane.
FIG. 4 is a diagrammatic perspective view of a sectioned present disclosure compressor shroud embodiment.
FIG. 5 is a diagrammatic partial view of an inner radial panel segment embodiment of a present disclosure compressor shroud.
FIG. 6 is a diagrammatic partial view of an inner radial panel segment embodiment of a present disclosure compressor shroud.
FIGS. 7-9 are diagrammatic sectional views of inner radial panel segment portion embodiments. FIG. 10 is a diagrammatic sectional view of an inner radial panel segment portion embodiment.
FIG. 11 is a diagrammatic sectional top view of an inner radial panel segment portion embodiment.
FIG. 12 is a diagrammatic sectional front view of an inner radial panel segment portion embodiment.
FIG. 13 is a diagrammatic planar view of a sectioned compressor shroud embodiment illustrating compressor bleed air flow velocity characteristics.
FIG. 13A is an enlarged view of a portion of the sectioned compressor shroud embodiment shown in FIG. 13.
FIG. 14 is a diagrammatic planar view of a sectioned compressor shroud embodiment illustrating compressor bleed air flow pressure characteristics.
FIG. 15 is a diagrammatic perspective view of a sectioned compressor shroud embodiment illustrating bleed air flow velocity streamlines.

### DETAILED DESCRIPTION

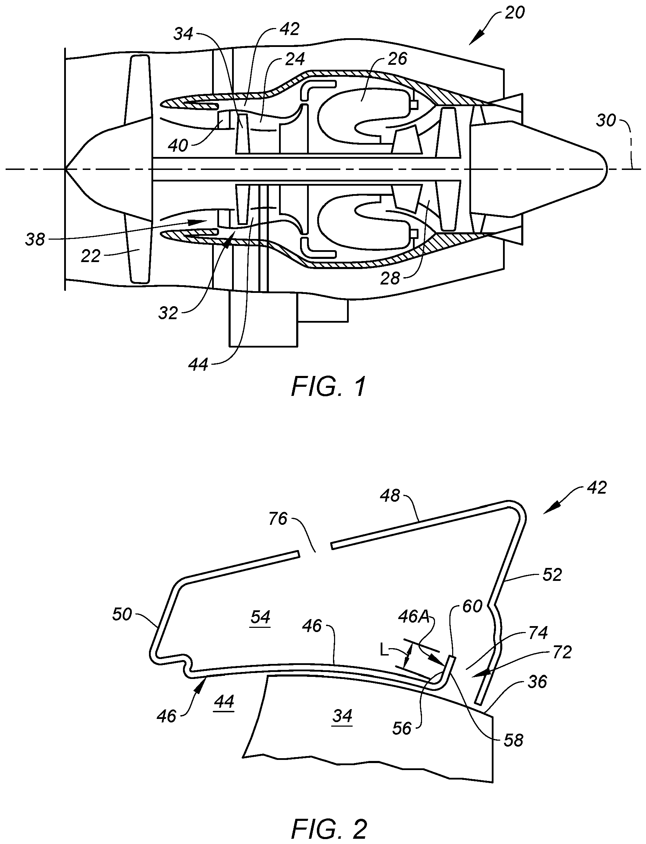

FIG. 1 illustrates a gas turbine engine 20 configured as a turbofan engine. The gas turbine engine 20 includes a fan section 22, a compressor section 24, a combustor 26, and a turbine section 28 extending along an axial centerline 30. The terms "forward" and "aft" are used herein to indicate position along the axial centerline 30; referring to the engine 20 shown in FIG. 1, the fan section 22 is disposed forward of the compressor section 24, and the compressor section 24 is disposed aft of the fan section 22. The term "radial" refers to a direction that is perpendicular to the axial centerline 30 and may be used herein to indicate position relative to the axial centerline 30; e.g., a first component positioned "radially inward" of a second component is disposed closer to the axial centerline 30 than the second component, and conversely the second component is disposed "radially outward" of the first component.

The compressor section 24 includes a plurality of compressor rotor stages 32, each having a plurality of rotor blades 34 ("compressor blades 34") extending radially outward from a hub. The radially outermost surface of a rotor blade 34 may be referred to as the rotor blade tip 36. Each rotor stage 32 is configured for rotation about the axial centerline 30. The compressor section 24 further includes one or more compressor stator stages 38. Each stator vane stage 38 includes a plurality of vanes 40 (e.g., airfoils) spaced apart from one another around the circumference of the stator vane stage 38. Each stator vane stage 38 is non-rotational about the axial centerline 30. Stator vanes 40 disposed immediately forward of a rotor stage 32 are typically configured to guide airflow into the rotor stage 32 in a desirable orientation. Stator vanes 40 disposed immediately aft of a rotor stage 32 are typically configured to guide airflow exiting the rotor stage 32 in a desirable orientation for downstream use.

A compressor shroud 42 may be disposed radially outside of the rotor stages 32 with the rotor blade tips 36 disposed in close proximity to the compressor shroud 42. A compressor shroud 42 may be disposed radially outside of the stator vane stages 38. The stator vanes 40 extend from the compressor shroud 42 to an inner radial flow structure. The compressor shroud 42 and the inner radial flow structure define a gas path 44 through the compressor 24.

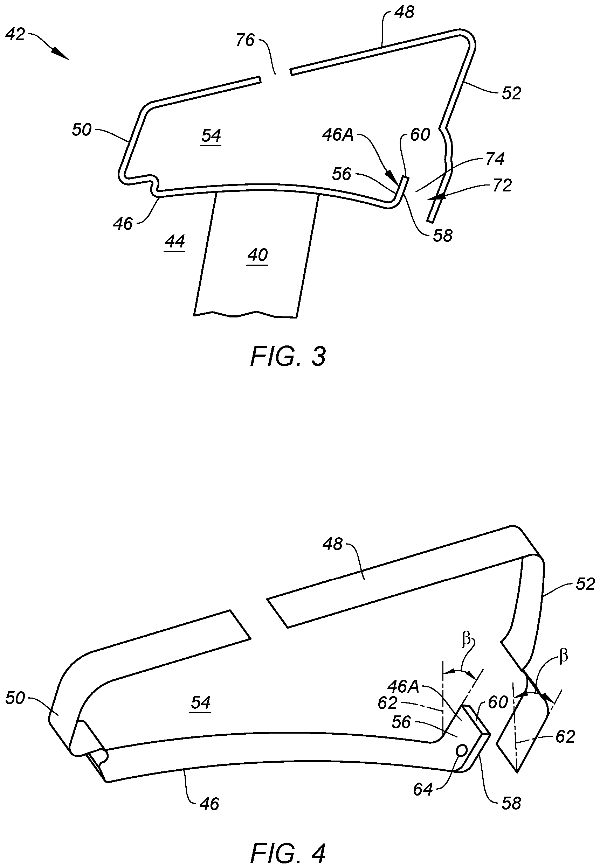

FIG. 2 diagrammatically illustrates a compressor shroud 42 section engaged with a rotor blade 34. The compressor shroud 42 section has an inner radial panel 46, an outer radial panel 48, a forward panel 50, and an aft panel 52. The aforesaid panels 46, 48, 50, 52 collectively define an annular structure having an interior region 54. The annular structure extends around the circumference of the compressor 24. The inner radial panel 46 may be contoured in the forward to aft axial direction to mate with the contour of the blade tips 36 to minimize the gap therebetween. The compressor shroud 42 geometry diagrammatically shown in FIG. 2 is an example of a compressor shroud 42 geometry and the present disclosure is not limited thereto. FIG. 3 diagrammatically illustrates a compressor shroud 42 section engaged with a stator vane 40.

Referring to FIG. 4, the inner radial panel 46 includes a segment 46Athat extends radially outward (e.g., into the interior region 54 of the compressor shroud 42) and extends circumferentially with the shroud. The inner radial panel segment 46A may be described as having a thickness that extends between an interior surface 56 and an exterior surface 58, and a length "L" that extends between the point at which the segment 46A deviates radially outward (away from the rest of the inner radial panel 46) and a distal end 60 of the segment 46A. The inner radial panel segment 46A may be disposed at an angle beta ("β") from a radial line 62 extending perpendicular to the axial centerline 30 (see FIG. 4). The angular disposition of the inner radial panel segment 46A may be described as being acute relative to the radial line 62 extending perpendicular to the axial centerline 30, or acute (via the angle complementary to beta) relative to the engine axial centerline 30. As will be detailed herein, the angle (e.g., "β") at which the inner radial panel segment 46A is disposed relative to the radial line 62 may be selected in given application to facilitate compressor bleed air entering the interior region 54 of the compressor shroud 42 from the compressor gas path 44. The embodiment shown in FIG. 4 illustrates an inner radial panel segment 46A that is integral with the remainder of the inner radial panel 46. The present disclosure is not limited to this embodiment. For example, in some embodiments as an alternative to the inner radial panel segment 46A, a structure element (non-integral with the inner radial panel 46) may be attached to the inner radial panel 46 and disposed in a similar manner as the inner radial panel segment 46A described herein. To facilitate the description herein, the inner radial panel segment 46A and its alternatives will be collectively referred to hereinafter as an inner radial panel segment 46A.

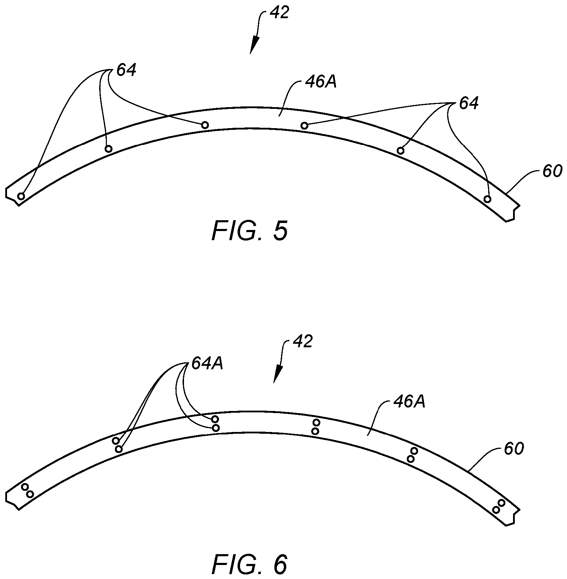

Embodiments of the present disclosure include a plurality of apertures 64 disposed in the inner radial panel segment 46A that permits air passage through the inner radial panel segment 46A; e.g., the aperture 64 extends through the thickness of the inner radial panel segment 46A between the interior and exterior surfaces 56, 58 of the segment 46A. FIG. 5 illustrates a single row of apertures 64 extending through the thickness of an inner radial panel segment 46A. FIG. 6 illustrates a plurality of rows of apertures 64 extending through the thickness of an inner radial panel segment 46A.

The apertures 64 shown in FIGS. 5 and 6 have a circular cross-section but that is not required; e.g., the apertures 64 may be oval, elliptical, slot shaped, or the like. An aperture 64 has a first cross-sectional geometry at the aperture opening at the segment interior surface 56 and a second cross-sectional geometry at the aperture opening at the segment exterior surface 58. In some embodiments, an aperture 64 may have the same cross-sectional geometries at the interior and exterior surfaces 56, 58 of the segment 46A; e.g., a constant diameter cylindrical aperture 64 extending through the thickness of the segment 46A. In some embodiments, the aperture openings at the segment interior and exterior surfaces 56, 58 may be different from one another; e.g., in terms of area, or cross-sectional geometry, or both. As an example, an aperture 64 may have a circular cross-sectional geometry with a first cross-sectional area ("A1") at the segment interior surface 56 and may have a circular cross-sectional geometry with a second cross-sectional area ("A2") at the segment exterior surface 58, where the aperture 64 cross-sectional area at the segment interior surface 56 ("A1") differs (e.g., is greater than) the aperture 64 cross-sectional area ("A2") at the segment exterior surface 58 (i.e., A1 > A2). This aperture 64 configuration may be referred to as a tapered configuration. It has been discovered that in many applications, the present disclosure performs well when the apertures 64 have a difference in cross-sectional area between the segment interior surface 56 and the segment exterior surface 58; e.g., the entrance of the aperture 64 at the inner radial panel segment interior surface 56 has a cross-sectional area that is greater than the cross-sectional area of the exit of the aperture 64 at the inner radial panel segment exterior surface 58 (i.e., A1 > A2). The aforesaid performance enhancements are particularly evident in many applications when the ratio of aperture entrance cross-sectional area to aperture exit cross-sectional area (A1 : A2) is about equal to or greater than one and one-half times (1.5 times). As another example, an aperture 64 may have different cross-sectional geometries at the segment interior surface 56 and the segment exterior surface 58; e.g., a slotted cross-sectional geometry at the segment interior surface 56 and a circular cross-sectional geometry at the segment exterior surface 58. In some embodiments, an aperture 64 may have a combination of such characteristics; e.g., a slotted cross-sectional geometry with a first cross-sectional area ("A1") at the segment interior surface 56 and a circular cross-sectional geometry with a second cross-sectional area ("A2") at the segment exterior surface 58, wherein A1 > A2. The present disclosure is not limited to the aperture 64 configuration examples given above to facilitate the description herein. The apertures 64 may be uniformly spaced apart from one in a circumferential direction as shown in FIGS. 5 and 6. In some embodiments, the number of apertures 64 disposed around the circumference of the inner radial panel segment 46A may be equal to or greater than the number of rotor blades 34 or vanes 40. The aperture 64 cross-sectional geometry, the circumferential spacing between apertures 64, and the number of apertures 64 may be varied to satisfy requirements of particular applications (detailed herein), and the present disclosure is not limited to any particular cross-sectional geometry, circumferential spacing, number of apertures 64, and the apertures 64 are not required to be in rows.

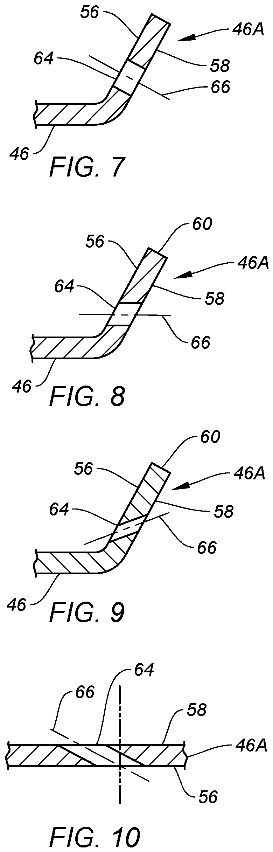

An aperture 64 may extend along an axis 66 that extends through the thickness of the inner radial panel segment 46A (e.g., in FIG. 7, the axis 66 is perpendicular to the segment interior and exterior surfaces 56, 58), or an aperture 64 may extend along an axis 66 that is skewed relative to a line perpendicular to the segment interior and exterior surfaces 56, 58; e.g., see FIGS. 8 and 9. The term "skew" is used herein is used to indicate that two lines (or surfaces) are non-parallel. The apertures 64 shown in FIGS. 7 and 9 each include an aperture entrance on the interior surface 56 that is misaligned (i.e., radially misaligned) with the aperture exit on the exterior surface 58. In some embodiments, the apertures 64 may be disposed along an axis 66 that is axially skewed; i.e., the aperture entrance on the interior surface 56 and the aperture exit on the exterior surface 58 are disposed on a line that is non-parallel to the engine axial centerline 30; e.g., see FIG. 10. For sake of clarity, an aperture 64 that extends along an axis that is parallel to the engine axial centerline 30 has zero axial misalignment.

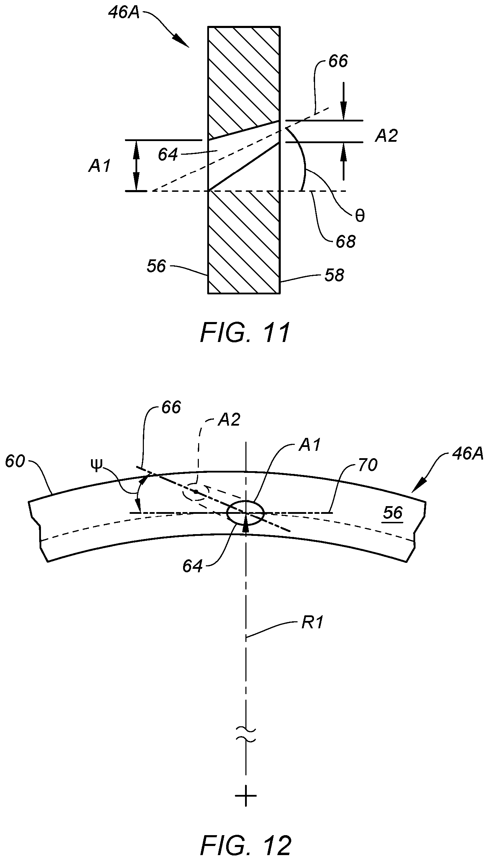

In some embodiments, the apertures 64 may have a combination of the features detailed above. FIGS. 11 and 12 illustrate an aperture 64 that has a tapered cross-sectional geometry with a first cross-sectional area ("A1") at the segment interior surface 56 and a second cross-sectional area ("A2") at the segment exterior surface 58 (A1 > A2). The aperture 64 follows an axis 66 that is skewed with two angular components. FIG. 11 is a top view (e.g., looking radially inward along the centerline of the inner radial panel segment 46A; e.g., along angle "β") showing the aperture 64 in cross-section. As can be seen, the aperture axis 66 is disposed at an angle theta (θ) from a line 68 that is parallel to the engine axial centerline 30. This may be referred to as an axial skew. Although the present disclosure is not limited to any particular degree of axial skew, it is understood that an aperture 64 axially skewed in the range of plus or minus forty-five degrees (+/- 45°) works well for the purposes described herein. The aperture axis 66 is also disposed at an angle psi (ψ). FIG. 12 is a front view of the inner radial panel segment 46A that shows the aperture axis 66 extending through the center of the aperture opening at the segment interior surface 56 and through the center of the aperture opening at the segment exterior surface 58. The center of the aperture opening at the segment interior surface 56 is disposed at a first radius ("R1"). FIG. 12 shows a line 70 that is tangential to the first radius ("R1") curve. The angle psi (ψ) is the angle between the aperture axis 66 and the line 70 tangential to the first radius ("R1") curve; i.e., the aperture axis 66 is skewed relative to the tangential line 70. This may be referred to as a radial skew. Although the present disclosure is not limited to any particular degree of radial skew, it is understood that an aperture 64 radially skewed in the range of plus or minus forty-five degrees (+/- 45°) works well for the purposes described herein. As will be detailed herein, the features of the apertures 64 may be selected to produce airflow parameters that are useful in countering undesirable airflow patterns within an "offtake passage".

Referring to FIGS. 2-4, the compressor shroud 42 includes an airflow entry (which may be referred to as an "offtake 72") disposed in the inner radial panel 46 proximate the aft panel 52. In some applications, rotor blades 34 within a rotor stage 32 may be engaged with the rotor shroud 42 coincidentally with the offtake 72; e.g., see FIG. 2. In some applications, stator vanes 40 within a stator vane stage 38 may be engaged with the compressor shroud 42 and spaced a distance from the offtake 72; e.g., see FIG. 3. The offtake 72 is defined by the inner radial panel segment 46A and a portion of the aft panel 52 of the compressor shroud 42. The region between the inner radial panel 46 and the aft panel 52 may be referred to as the offtake passage 74. In the embodiments shown in FIGS. 2-4, the inner radial panel segment 46A and the portion of the aft panel 52 are generally parallel to one another and the offtake passage 74 is defined therebetween. To be clear, the present disclosure is not limited to the compressor shroud 42 geometry diagrammatically shown in FIGS. 2-4, and is also not limited to having an offtake 72 that is disposed proximate the aft panel 52 of the compressor shroud 42; e.g., the offtake 72 may be disposed in the inner radial panel 46 spaced apart from the aft panel 52.

The compressor shroud 42 also includes an airflow exit 76 disposed in the outer radial panel 48. The airflow exit 76 is shown diagrammatically as a void within the outer radial panel 48. In some embodiments, the airflow exit 76 may be a circumferentially extending passage. In other embodiments, the airflow exit 76 may be a plurality of discrete ports spaced around the circumference of the compressor shroud 42. The present disclosure is not limited to any particular airflow exit 76 configuration.

Air bled from the gas path 44 in the compressor 24 (i.e., "compressor bleed air") may be used for several different purposes, including for cooling and/or pressurizing compartments within the engine 20, for compartment purging purposes, for compressor operability, and the like. The compressor bleed air may be bled constantly or it may be bled on demand as a result of a downstream valving that coordinates with the operation of the engine 20. Operationally, compressor bleed air is generally viewed as important but also "expensive". Pressure differentials very often provide the motive force necessary to move air through a compartment or a component within a gas turbine engine. In the absence of air moving through the compartment or component, undesirable excessive heating may occur. Hence, the importance. The pressure differentials that provide the motive force are often not significant. Hence, pressure losses experienced by the compressor bleed air can minimize its usefulness. The compressor bleed air is considered to be "expensive", for example, because air bled off the compressor 24 is no longer available for the combustion and expansion that powers the turbine section. Hence, compressor bleed air can represent a performance deficit.

The inventors have discovered that the characteristics of a compressor shroud offtake 72 can have significant effects on the compressor bleed air traveling through the offtake 72.

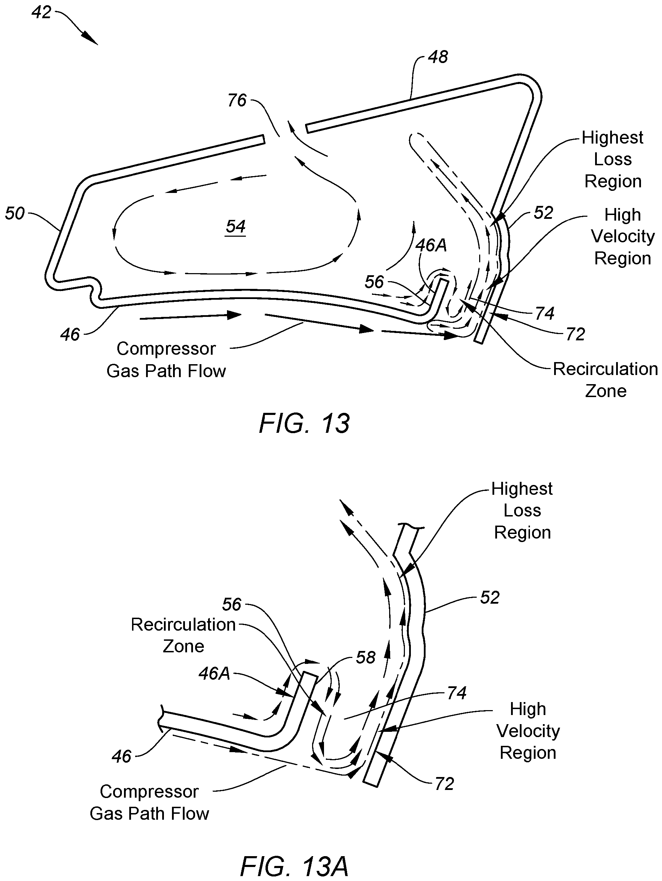

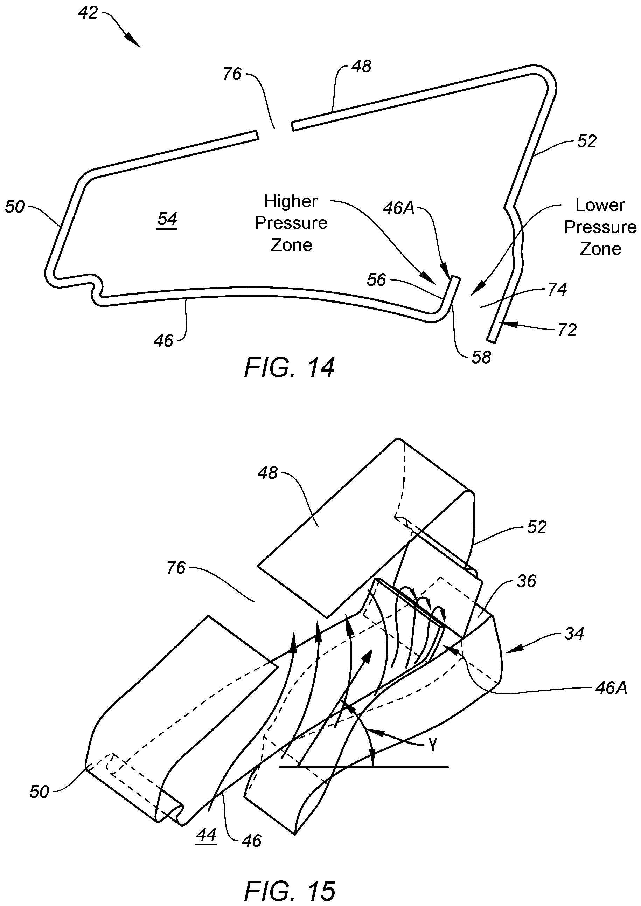

FIGS. 13 and 13A diagrammatically shows compressor bleed air entering and traveling through the compressor shroud 42 as indicated by arrows representative of flow velocity vectors. The flow diagrammatically shown is based on computational fluid dynamics (CFD) predictions of compressor bleed air flow when the engine 20 is operating in a compressor bleed mode. FIG. 14 diagrammatically shows pressure regions on opposite sides of the inner radial panel segment 46A that are associated with the compressor bleed air entering and traveling through the compressor shroud 42 as indicated in FIGS. 13 and 13A. The compressor shroud 42 diagrammatically shown in FIGS. 13, 13A, and 14 does not include apertures 64 disposed within the inner radial panel segment 46A and no apertures were considered in the compressor bleed air flow predictions for the representations in FIGS. 13, 13A, and 14.

The compressor bleed air flow diagrammatically shown in FIGS. 13 and 13A includes a high velocity region in close proximity to a portion of the aft panel 52 of the compressor shroud 42. This high velocity region is likely due, at least in part, to high velocity gas path 44 flow in close proximity to the shroud and the angled orientation ("β" - see FIG. 4) of the offtake 72. The high velocity region in understood to produce flow separation near the forward portion of the offtake 72 forward of the high velocity region and a recirculation zone disposed between the high velocity region and the exterior surface 58 of the inner radial panel segment 46A. The recirculation zone creates large flow blockage that forces most of the bleed flow onto the downstream side of offtake 72 and that impedes the flow of compressor gas path 44 air into the compressor shroud 42. The specific position and size of the recirculation zone may vary depending on bleed conditions; e.g., the recirculation zone may shift position within the offtake passage 74. It is further understood that the described flow pattern, including the recirculation zone and the high velocity regions create loss regions that contribute to a reduction in pressure recovery, reduce pressure head available for cooling/pressurizing of downstream components, and also are understood to produce an undesirable increase in noise signature and may introduce undesirable acoustic resonance into surrounding structure.

In those instances where a rotor blade tip 36 is aligned with an offtake 72, the uneven pressure field created by rotating blade 34 is understood to form a periodic pressure difference that drives flow into or out of the interior region 54 of the compressor shroud 42. As a result, even when compressor bleed air is not being bled from the gas path 44 (e.g., downstream valving closed), aspects of the undesirable flow pattern in the offtake passage 74 (e.g., a recirculation zone) are understood to still exist and can interact with gas path 44 flow and detrimentally affect overall compressor 24 performance.

The present disclosure is configured to alter the undesirable flow patterns within the offtake passage 74 and thereby mitigate the undesirable aspects associated therewith. As shown in FIG. 14, it has been discovered that a region of relatively high static pressure is disposed adjacent the interior surface 56 of the inner radial panel segment 46A and a region of relatively low static pressure is disposed adjacent the exterior surface 58 of the inner radial panel segment 46A; i.e., a difference in pressure across the inner radial panel segment 46A. The present disclosure apertures 64 that extend through the inner radial panel segment 46A leverage this difference in pressure to permit airflow through inner radial panel segment 46A; i.e., from the high pressure region to the lower pressure region. The flow through the inner radial panel segment apertures 64 is understood to cause a reduction in the flow blockage that would otherwise be present because of the recirculation zone. The reduction in the flow blockage, in turn, is understood to reduce the flow velocity that would otherwise be present within the high velocity region described above and allow the incoming compressor bleed air to occupy more of the central region of the offtake passage 74. The resulting flow pattern is understood to reduce flow losses within the offtake passage 74 and increase the efficiency of the compressor bleed system.

FIG. 15 diagrammatically illustrates flow velocity streamlines inside the compressor shroud interior region 54 for a compressor shroud 42 embodiment without apertures 64 within the inner radial panel segment 46A. It has been discovered that the flow velocity streamlines generally align with the rotor blade tip stagger angle gamma (γ). Embodiments of the present disclosure may leverage the orientation of the flow within the compressor shroud interior region 54 (as diagrammatically illustrated by the flow velocity streamlines) to facilitate the passage of air through the apertures 64 disposed in the inner radial panel segment apertures 64. As described above with respect to FIGS. 11 and 12, an aperture 64 may extend along an axis 66 that is skewed (e.g., axially and /or radially) for alignment with the flow within the compressor shroud interior region 54. In the example shown in FIGS. 11 and 12, the aperture axis 66 is disposed at an angle theta (θ) from a line that is parallel to the engine axial centerline 30 and is therefore axially skewed by the angle theta (θ). The aperture axis 66 is also disposed at an angle psi (ψ) from a line that is tangential to the curve at a first radius ("R1") on which the interior surface aperture opening is disposed, and is therefore radially skewed by the angle psi (ψ). The aperture 64 example shown in FIGS. 11 and 12 is provided to illustrate how an aperture 64 disposed within the inner radial panel segment 46A may be oriented for flow alignment purposes and the present disclosure is not limited to this particular example.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc. The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. An annular compressor shroud for a turbine engine that extends along an engine axial centerline, comprising:
an inner radial panel (46), an outer radial panel (48), a forward panel (50), and an aft panel (52) that collectively define an annular interior region (54), wherein the inner radial panel (46) is disposed radially inside of the outer radial panel (48), the forward panel (50) extends between the inner radial panel (46) and the outer radial panel (48) and is disposed at a forward end of the compressor shroud (42), and the aft panel (52) extends between the inner radial panel (46) and the outer radial panel (48) and is disposed at an aft end of the compressor shroud (42);
an airflow exit opening (76) disposed within the outer radial panel (48); and
an offtake (72) disposed in the inner radial panel (46), the offtake (72) defined in part by a segment (46A) of the inner radial panel (46), the inner radial panel segment (46A) extending a distance into the annular interior region (54), wherein the offtake (72) includes an offtake passage (74) that is in part defined by the inner radial panel segment (46A);
wherein:
the inner radial panel segment (46A) has an interior surface (56) contiguous with the annular interior region (54) and an exterior surface (58) that is opposite the interior surface (56),
the exterior surface (58) is contiguous with the offtake passage (74), and
a plurality of apertures (64) are defined in the inner radial panel segment (46A) and are configured to permit airflow between the annular interior region (54) and the offtake passage (74).

2. The annular compressor shroud of claim 1, wherein:
the offtake (72) is defined by the inner radial panel segment (46A) and a portion of the aft panel (52),
the inner radial panel segment (46A) is spaced apart from the aft panel portion, and
the offtake passage (74) is disposed between the inner radial panel segment (46A) and the aft panel portion.

3. The annular compressor shroud of claim 1 or 2, wherein the inner radial panel segment (46A) extends lengthwise at an inner radial panel segment angle that is acute relative to the axial centerline (30).

4. The annular compressor shroud of any preceding claim, wherein the apertures (64) are circumferentially spaced apart from one another.

5. The annular compressor of any preceding claim, wherein each aperture (64) has a first opening at the interior surface (56) of the inner radial panel segment (46A) and a second opening at the exterior surface (58) of the inner radial panel segment (46A), and the first opening has a first geometric shape and the second opening has a second geometric shape, and the first geometric shape and the second geometric shape are the same.

6. The annular compressor of claim 5, wherein the first opening has a first cross-sectional area (A1) and the second opening has a second cross-sectional area (A2), and the first cross-sectional area (A1) is different in magnitude than the second cross-sectional area (A2), optionally wherein the first cross-sectional area (A1) is greater in magnitude than the second cross-sectional area (A2), further optionally wherein the first cross-sectional area (A1) is about one and one-half times greater in magnitude than the second cross-sectional area (A2).

7. The annular compressor of any of claims 1 to 4, wherein each aperture (64) has a first opening at the interior surface (56) of the inner radial panel segment (46A) and a second opening at the exterior surface (58) of the inner radial panel segment (46A), and the first opening has a first geometric shape and the second opening has a second geometric shape, and the first geometric shape is different than the second geometric shape, optionally wherein the first opening has a first cross-sectional area (A1) and the second opening has a second cross-sectional area (A2), and the first cross-sectional area (A1) is greater in magnitude than the second cross-sectional area (A2).

8. The annular compressor of any preceding claim, wherein each aperture (64) has a or the first opening with a first center point at the interior surface (56) of the inner radial panel segment (46A) and a or the second opening with a second center point at the exterior surface (58) of the inner radial panel segment (46A), and each aperture (64) has an aperture axis (66) that extends between the first center point and the second center point, and the aperture axis (66) extends in a direction parallel to the engine axial centerline (30).

9. The annular compressor of any of claims 1 to 7, wherein each aperture (64) has a or the first opening with a or the first center point at the interior surface (56) of the inner radial panel segment (46A) and a or the second opening with a or the second center point at the exterior surface (58) of the inner radial panel segment (46A), and each aperture (64) has an aperture axis (66) that extends between the first center point and the second center point, and the aperture axis (66) extends in a direction that is skewed relative to the engine axial centerline (30).

10. The annular compressor of claim 9, wherein:
the aperture axis (66) extends in a direction that is radially skewed relative to the engine axial centerline (30) or axially skewed relative to the engine axial centerline (30); or
the aperture axis (66) extends in a direction that is both radially skewed relative to the engine axial centerline (30) and axially skewed relative to the engine axial centerline (30).

11. The annular compressor of any preceding claim, wherein each aperture (64) has a or the first opening with a or the first center point at the interior surface (56) of the inner radial panel segment (46A) and a or the second opening with a or the second center point at the exterior surface (58) of the inner radial panel segment (46A), and wherein the first center point is axially misaligned with the second center point.

12. The annular compressor of any preceding claim, wherein each aperture (64) has a or the first opening with a or the first center point at the interior surface (56) of the inner radial panel segment (46A) and a or the second opening with a or the second center point at the exterior surface (58) of the inner radial panel segment (46A), and wherein the first center point is radially misaligned with the second center point.

13. The annular compressor of any of claims 1 to 10, wherein each aperture (64) has a or the first opening with a or the first center point at the interior surface (56) of the inner radial panel segment (46A) and a or the second opening with a or the second center point at the exterior surface (58) of the inner radial panel segment (46A), and wherein the first center point is axially and radially misaligned with the second center point.

14. A gas turbine engine having an engine axial centerline, comprising:
a compressor section (24) having a plurality of rotor stages (32) and stator vane stages, each rotor stage (32) having a plurality of rotor blades, and each rotor blade having a blade tip, each stator vane stage having a plurality of stator vanes;
a combustor section; and
a turbine section, wherein the compressor further includes the annular compressor shroud (42) of any preceding claim.

15. The gas turbine engine of claim 14, wherein each aperture (64) has a or the first opening at the interior surface (56) of the inner radial panel segment (46A) and a or the second opening at the exterior surface (58) of the inner radial panel segment (46A), and the first opening has a first cross-sectional area (A1) and the second opening has a second cross-sectional area (A2), and the first cross-sectional area (A1) is greater in magnitude than the second cross-sectional area (A2).
